# EUROPÄISCHE PATENTSCHRIFT

(11) **EP 2 416 991 B1**
(45) Veröffentlichungstag und Bekanntmachung des Hinweises auf die Patenterteilung: **23.08.2017**
(21) Anmeldenummer: 10708219.0
(22) Anmeldetag: 15.03.2010
(51) Int. Cl.: B60R 16/02

(54) **BEFESTIGUNGSEINRICHTUNG FÜR EIN KABEL**
FASTENING DEVICE FOR A CABLE
DISPOSITIF DE FIXATION D'UN CÂBLE

(30) Priorität: 06.04.2009 DE 102009002197
(43) Veröffentlichungstag der Anmeldung: 15.02.2012
(73) Patentinhaber: Robert Bosch GmbH, 70442 Stuttgart (DE)
(72) Erfinder: NINOMIYA, Kenichi, Ludwigsburg 71636 (DE)
(86) Internationale Anmeldenummer: PCT/EP2010/053285
(87) Internationale Veröffentlichungsnummer: WO 2010/115680

(56) Entgegenhaltungen:
- EP-A1- 1 193 436
- EP-A2- 1 746 699
- US-A- 3 053 564
- US-A1- 2007 039 751
- US-B1- 6 660 937

## Beschreibung

### Stand der Technik

Die Erfindung geht aus von einer Befestigungseinrichtung für eine Leitung nach der Gattung des unabhängigen Anspruchs. Aus der DE 10 2006 042 663 A1 ist bereits eine solche Befestigungseinrichtung bekannt, welche eine in einem Halter arretierbare, die Leitung wenigstens teilsweise umschließende Tülle aus elastisch verformbarem Material aufweist, die mittels einer Kontur in einer Aussparung des Halters lösbar befestigt ist. Die Oberfläche einer aus Kunststoff gespritzten Tülle wird segmentiert gestaltet zur Erzielung einer leichteren Verformbarkeit der Tülle beim Montieren in einem zugeordneten Halter.

Die EP 1 746 699 A2 zeigt eine Kabeldurchführung, die das Einführen eines Kabels erleichtert und dessen Zurückziehen erschwert.

Die US 6 660 937 B1 zeigt eine Tülle für eine Automobil-Verkebelung.

Die US 3 053 564 A zeigt eine Kabelkanal zur Führung eines elektrischen Kabels in einem Fahrzeug.

Die US 2007/039751 A1 zeigt einen Kfz-Kabelbaum mit einer Tülle zwischen Insassen und im Motorraum.

Es ist Aufgabe der vorliegenden Erfindung, eine Befestigungseinrichtung anzugeben, die sich durch eine besonders einfache, lagerichtige Montage auszeichnet. Diese Aufgabe wird gelöst durch die Merkmale des unabhängigen Anspruchs.

### Vorteile der Erfindung

Die erfindungsgemäße Befestigungseinrichtung für ein Kabel zeichnet sich demgegenüber dadurch aus, dass einerseits eine lagerichtige Montage durch das Vorsehen eines Führungsteils gewährleistet ist. Weiterhin wird auch sichergestellt, dass die Befestigungseinrichtung leicht in einer Aufnahmeöffnung montiert werden kann, da Mittel zur Erhöhung der Flexibilität des Führungsteils vorgesehen sind. Hierbei kommt beispielsweise eine Materialausnehmung in Betracht. Diese ist vorzugsweise senkrecht zu der Montagerichtung der Befestigungseinrichtung angeordnet, so dass insbesondere eine leichtere

Bewegungsmöglichkeit des Führungsteils in axialer Kabelrichtung ermöglicht wird. Damit lässt sich die Befestigungseinrichtung besser in die Aufnahmeöffnung einbringen.

In einer zweckmäßigen Weiterbildung ist vorgesehen, dass die Befestigungseinrichtung zumindest einen rotationshemmenden Abschnitt aufweist. Dieser unterbindet eine um die Kabelachse rotierende Bewegung der Befestigungseinrichtung in der Aufnahmeöffnung, so dass störendes Verdrehen des Kabels unterbleibt. Hierzu ist die ansonsten kreisförmig verlaufende Kontur, die in einer Aufnahmeöffnung lösbar befestigt ist, durch nicht rotationssymmetrische Abschnitte unterbrochen. Diese wirken vorzugsweise mit einer Verengung der Aufnahmeöffnung zusammen. Gerade diese Lösung zeichnet sich durch eine hohe Festigkeit auf, ohne dass die Montageflexibilität weiter eingeschränkt wird. Hierzu sind die rotationshemmenden Abschnitte vorzugsweise zumindest teilweise parallel zur Montagerichtung ausgebildet.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Befestigungseinrichtung für ein Kabel ist in der Zeichnung dargestellt und wird nachfolgend näher erläutert.

Es zeigen:
die Figur 1 eine perspektivische Ansicht der Befestigungseinrichtung mit Kabel in der Aufnahmeöffnung,
die Figur 2 eine Schnittdarstellung senkrecht zur Kabelachse entlang der Aufnahmeöffnung,
die Figur 3 eine Schnittdarstellung entlang der Längsachse des Kabels,
die Figur 4 eine perspektivische Ansicht der Befestigungseinrichtung von links,
die Figur 5 eine perspektivische Ansicht der Befestigungseinrichtung von rechts,
die Figur 6 eine erste Seitenansicht der Befestigungseinrichtung,
die Figur 7 eine zweite Ansicht der Befestigungseinrichtung,
die Figur 8 eine Schnittdarstellung entlang der Linie A-A gemäß Figur 7 sowie die Figur 9 eine Schnittdarstellung entlang der Linie B-B gemäß Figur 7.

Die Befestigungseinrichtung für ein Kabel 12 umfasst eine im Wesentlichen rotationssymmetrisch ausgebildete Tülle 10. Im montierten Zustand ist die Tülle 10 in einer Aufnahmeöffnung 16 eines Halters 18 montiert. Weiterhin weist der Halter 18 eine vorzugsweise keilförmig orientierte Montageöffnung 15 auf, in die im montierten Zustand ein Führungsteil 13 der Tülle 10 eingeschoben ist. Der Halter 18 besitzt eine im Wesentliche kreisförmige Aufnahmeöffnung 16, die zur Montagerichtung 11 hin in eine Verengung 17 mündet. Die Verengungsstelle 17 weist im Wesentlichen parallel zur Montagerichtung 11 orientierte Seitenkanten auf. Nach außen hin läuft die Verengung 17 in eine vorzugsweise trichterförmige Montageöffnung 15 aus, die sich nach außen hin von der Verengung 17 ausgehend weitet. Die Tülle 10 weist an der Stelle, an der sie in der Aufnahmeöffnung 16 angeordnet ist, im unteren Bereich einen kreisförmigen Abschnitt 19 auf, welche eine im Außendurchmesser reduzierte nutförmige Kontur 26 besitzt. Dort, wo die Tülle 10 mit der Verengung 17 des Halters 18 zusammenwirkt, sind rotationshemmende Abschnitte 21 vorgesehen. Dies sind - bezogen auf die Kabelachse als mögliche Rotationsachse - nicht rotationssymmetrische Abschnitte 21, die vorzugsweise zumindest eine parallel zur Montagerichtung 11 verlaufende Seitenfläche aufweisen. An die rotationshemmenden Abschnitte 21 schließt sich eine Ausnehmung 14 an, die im Wesentlichen senkrecht zur Montagerichtung 11 orientiert ist. Durch diese gezielte Materialschwächung zwischen dem oberen Abschnitt des Führungsteils 13 und dem rotationssymmetrischen Teil der Tülle 10 wird eine höhere Flexibilität bzw. Beweglichkeit des oberen Abschnitts des Führungsteils 13 gegenüber dem rotationssymmetrischen Teil der Tülle 10 erreicht. Weiterhin läuft das Führungsteil 13 nach oben hin kegelförmig aus, wobei der Kegelwinkel 20 im Wesentlichen mit dem Öffnungswinkel der Montageöffnung 15 übereinstimmt.

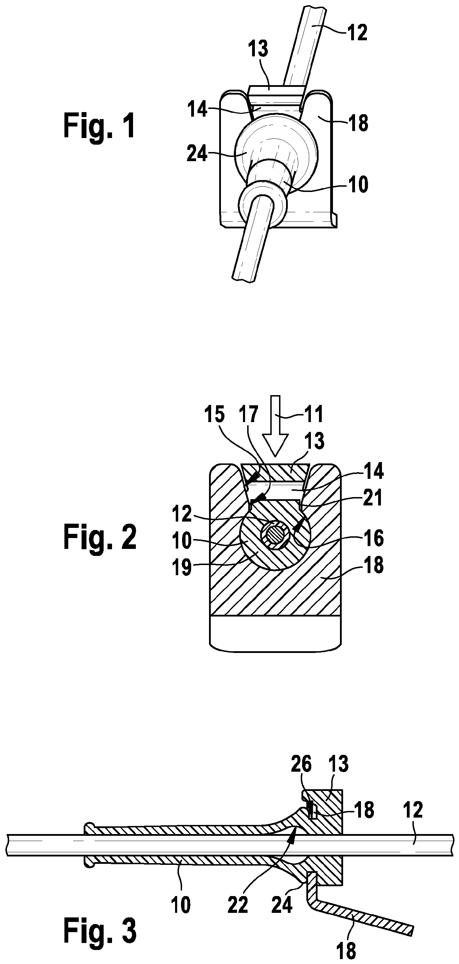

Aus der Seitenansicht gemäß Figur 3 lässt sich entnehmen, dass das Führungsteil 13 im oberen Bereich über die nutförmige Kontur 26 hinausragt.

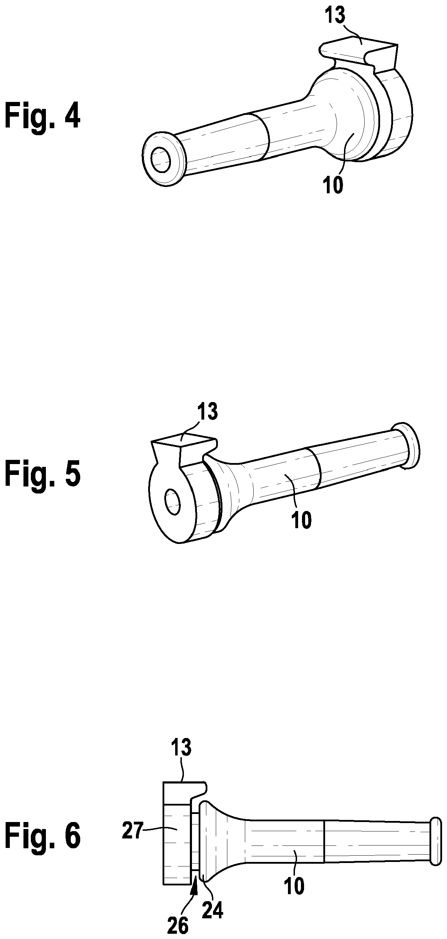

Gleiches lässt sich auch den Ansichten gemäß den Figuren 4 bis 6 entnehmen.

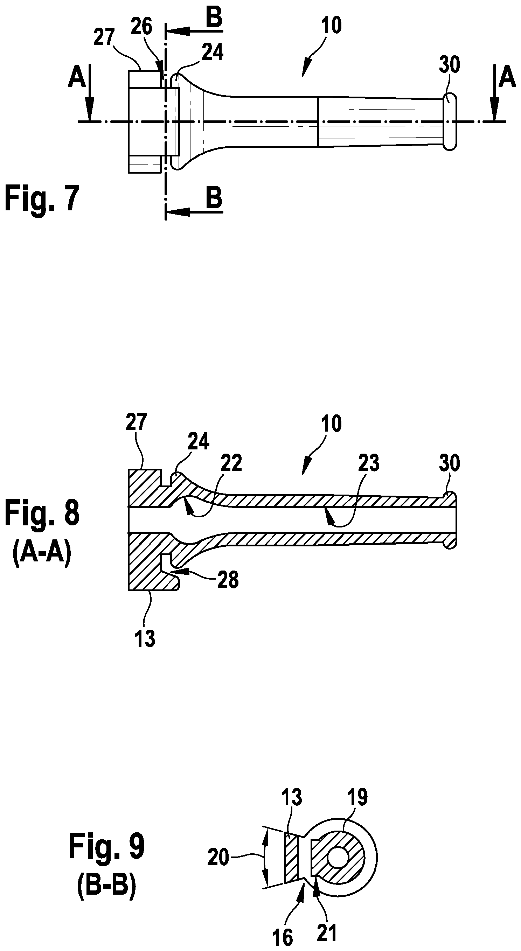

In der Figur 7 ist noch einmal die Seitenansicht der Tülle 10 in detaillierterer Form gezeigt. Daraus geht hervor, dass eine im Wesentlichen zylinderförmige Seitenwand 27 vorgesehen ist, die anschließend im Außendurchmesser reduziert über eine Kante in die nutförmige Kontur 26 übergeht. An die nutförmige Kontur 26, die im Wesentlichen einen zylinderförmigen Nutgrund aufweist, schließt sich eine Wulst 24 an, deren Außendurchmesser größer ist als der der Kontur 26. Diese Wulst 24 ist mit einem gewissen Radius versehen und fällt im Durchmesser kontinuierlich ab, weist dann einen konstanten Außendurchmesser auf, während in einem letzten Abschnitt der Außendurchmesser nochmals leicht reduziert wird. Die Tülle 10 läuft in einer vorderen Wulst 30 aus, deren Außendurchmesser wieder leicht vergrößert ist.

In der Schnittdarstellung A-A gemäß Figur 8 wird deutlich, dass das Führungsteil 13 über die Kontur 26 übersteht und so einen Hinterschnitt 28 ausbildet. Außerdem durchdringt eine im Wesentlichen zylinderförmige Kabeldurchführung 23 die Tülle 10 in axialer Richtung. Diese zylinderförmige Kontur wird kurz vor der nutförmigen Kontur 26 im Außendurchmesser zu einem Hohlraum 22 aufgeweitet. Der sich so ergebende Hohlraum 22 zwischen Tülle 10 und Kabel 12 wird auch in Figur 3 nochmals hervorgehoben. Dadurch wird die Flexibilität der Tülle 10 erhöht, indem beispielsweise durch Drücken der Wulst 24 sich die Lage der Kontur 26 etwas verändert zur Erleichterung der Montage der Tülle 10 im Halter 18.

In der Schnittdarstellung B-B gemäß Figur 9 wird nochmals deutlich, dass im Bereich der Aufnahmeöffnung 16 die Tülle einen im Wesentlichen kreisförmigen Abschnitt 19 aufweist, der durch rotationshemmende, vorzugsweise parallele Abschnitte 21 unterbrochen wird. Das Führungsteil 13 schließt sich über eine gezielte Materialschwächung, nämlich eine Ausnehmung 14, an die rotationshemmenden Abschnitte 21 an.

Die Tülle 10 besteht vorzugsweise aus Kunststoff und ist mittels eines Kunststoff-Spritzverfahrens direkt auf das Kabel 12 aufgespritzt. Hierbei kann sich die Tülle 10 mit der Isolation des Kabels 12 unmittelbar verbinden und sitzt damit fest und unverrückbar in einer für den jeweiligen Befestigungszweck vorgegebenen Position auf dem Kabel 12. Zur Montage der Tülle 10 wird diese in Montagerichtung 11 in die Aufnahmeöffnung 16 eingebracht. Das geeignete Material stellt sicher, dass die Tülle 10 so verformt werden kann, dass die Kontur 26 einerseits in die Öffnung 16 gelangt, aufgrund einer elastischen Verformung jedoch ein spielfreier Sitz der Tülle 10 in dem Halter 18 ermöglicht wird. Zur lagerichtigen Montage ist das Führungsteil 13 mit einem keilförmigen Abschnitt, mit dem Winkel 20 ausgestattet, welcher mit einer entsprechenden keilförmigen Montageöffnung 15 zusammenwirkt. Die elastische Verformbarkeit der Tülle 10 wird noch durch den Hohlraum 22 weiter unterstützt, auf den Druck ausgeübt werden kann, so dass sich die Wulst 24 in axialer Richtung des Kabels 12 bewegt, um insbesondere an der Stelle, wo das Führungsteil 13 oberhalb der Kontur 26 angeordnet ist, diese zu weiten und dadurch die Montage zu erleichtern. Auch das Führungsteil 13 lässt sich dank der Ausnehmung 14 leicht in Achsrichtung des Kabels 12 hin- und herbewegen, um so die Montage ebenfalls weiter zu erleichtern.

Es sind auch andere Abwandlungen, insbesondere in der Geometrie möglich, ohne die Funktionalität der Tülle 10 zu beeinträchtigen. So können insbesondere die Führungskanten des Führungsteils 13 nicht notwendigerweise keilförmig ausgebildet sein, auch andere der Führung dienende Geometrien sind möglich. Weiterhin kann auch die Form der Ausnehmung 14 variieren, indem beispielsweise mehrere Ausnehmungen an unterschiedlichen Stellen vorzusehen sind. Der Fachmann wird sie insbesondere an der Stelle vorsehen, wo sie der Montageerleichterung besonders dienlich sind. Auch die rotationshemmenden Abschnitte 21 müssen nicht in Form zweier, paralleler Kanten ausgebildet sein, es könnte auch nur eine, nicht rotationssymmetrisch ausgebildete Fläche genügen.

Die erfindungsgemäße Tülle 10 eignet sich insbesondere zur Montage von Kabeln 12 in einem Kraftfahrzeug. Jedoch auch andere Anwendungsgebiete, die nicht auf das Kraftfahrzeug eingeschränkt sind, sind möglich.

## Patentansprüche

1. Befestigungseinrichtung für ein Kabel, insbesondere für ein elektrisches Kabel (12) in einem Kraftfahrzeug, mit einer in einem Halter (18) arretierbaren, das Kabel (12) wenigstens teilweise in axialer Richtung umschließenden Tülle (10) aus elastisch verformbarem Material, welche mittels einer Kontur (26) in einer Aufnahmeöffnung (16) des Halters (18) lösbar befestigt ist, wobei die Tülle (10) zumindest ein Führungsteil (13) zur lagerichtigen Montage (10) der Tülle (10) in der Aufnahmeöffnung (16) und weiterhin Mittel (14, 22) zur Erhöhung der Flexibilität zumindest des Führungsteils (13) aufweist, **dadurch gekennzeichnet, dass** das Führungsteil (13) mit einem keilförmigen Abschnitt mit einem Winkel (20) ausgestattet ist, der ausgebildet ist, um mit einer entsprechend keilförmigen Montageöffnung (15) des Halters zusammenzuwirken und dass als Mittel zur Erhöhung der Flexibilität zumindest eine Ausnehmung (14) vorgesehen ist, die senkrecht zu einer Montagerichtung (11) orientiert ist und/oder dass als Mittel zur Erhöhung der Flexibilität die Tülle (10) so ausgestattet ist, dass sich zumindest ein Hohlraum (22) zwischen Tülle (10) und Kabel (12) ausbildet, der eine Bewegung der Tülle (10) relativ zum Kabel (12) ermöglicht.

2. Befestigungseinrichtung nach Anspruch 1, **dadurch gekennzeichnet, dass** das Führungsteil (13) einen Winkel (20) aufweist, der im Wesentlichen mit einem Öffnungswinkel der Montageöffnung (15) übereinstimmt.

3. Befestigungseinrichtung nach einem der vorhergehenden Ansprüche, **dadurch gekennzeichnet, dass** das Führungsteil (13) entgegen einer Montagerichtung (11) keilförmig ausläuft.

4. Befestigungseinrichtung nach einem der vorhergehenden Ansprüche, **dadurch gekennzeichnet, dass** die Tülle (10) zumindest im Bereich der Kontur (26) einen rotationshemmenden Abschnitt (21) aufweist.

5. Befestigungseinrichtung nach einem der vorhergehenden Ansprüche, **dadurch gekennzeichnet, dass** der rotationshemmende Abschnitt (21) eine bezogen auf die Kabelachse nicht rotationssymmetrische Ausgestaltung aufweist.

6. Befestigungsvorrichtung nach Anspruch 4 oder 5, **dadurch gekennzeichnet, dass** die Tülle (100) an einer Stelle, an der sie mit einer Verengung (17) des Halters (18) zusammenwirkt, rotationshemmende Abschnitte (21) aufweist, insbesondere wobei die rotationshemmenden Abschnitte (21) zumindest eine parallel zur Montagerichtung (11) verlaufende Seitenfläche aufweisen.

7. Befestigungseinrichtung nach einem der vorhergehenden Ansprüche, **dadurch gekennzeichnet, dass** die Kontur (26) ringförmig ausgebildet ist.

8. Befestigungseinrichtung nach einem der vorhergehenden Ansprüche, **dadurch gekennzeichnet, dass** das Führungsteil (13) zumindest teilweise über die Kontur (26) übersteht.

9. Befestigungseinrichtung nach einem der vorhergehenden Ansprüche, **dadurch gekennzeichnet, dass** das Führungsteil (13) mit der Tülle (10) über zumindest einen Hinterschnitt (28) verbunden ist.

10. Befestigungseinrichtung nach einem der vorhergehenden Ansprüche, **dadurch gekennzeichnet, dass** die Tülle (10) angrenzend an die Kontur (26) eine Seitenwand (27) aufweist.

11. Befestigungseinrichtung nach einem der vorhergehenden Ansprüche, **dadurch gekennzeichnet, dass** die Tülle (10) angrenzend an die Kontur (26) eine Wulst (24) aufweist.

12. Befestigungseinrichtung nach einem der vorhergehenden Ansprüche, **dadurch gekennzeichnet, dass** der Außendurchmesser der Seitenwand (27) etwas größer ausgebildet ist als der Außendurchmesser der Wulst (24).

13. Befestigungseinrichtung nach einem der vorhergehenden Ansprüche, **dadurch gekennzeichnet, dass** an einem Ende der Tülle (10) eine vordere Wulst (30) vorgesehen ist.

14. Befestigungseinrichtung nach einem der vorhergehenden Ansprüche, **dadurch gekennzeichnet, dass** der Übergang zwischen Kontur (26) und Wulst (24) mit einem bestimmten Radius erfolgt.

15. Befestigungseinrichtung nach einem der vorhergehenden Ansprüche, **dadurch gekennzeichnet, dass** der Übergang zwischen der Seitenwand (27) und der Kontur (26) über eine Kante erfolgt.

## Claims

1. Fastening device for a cable, in particular for an electrical cable (12) in a motor vehicle, having a grommet (10) which can be clamped in a holder (18), surrounds the cable (12) at least partially in the axial direction and is composed of elastically deformable material which is detachably fastened in a receiving opening (16) in the holder (18) by means of a contour (26), wherein the grommet (10) has at least one guide part (13) for installing (10) the grommet (10) in the receiving opening (16) in the correct position and also has means (14, 22) for increasing the flexibility at least of the guide part (13), **characterized in that** the guide part (13) is equipped with a wedge-shaped section, with an angle (20), which is designed to interact with a correspondingly wedge-shaped installation opening (15) of the holder and
**in that** at least one recess (14) which is oriented perpendicular to an installation direction (11) is provided as means for increasing the flexibility and/or
**in that**, as means for increasing the flexibility, the grommet (10) is designed such that at least one cavity (22) is formed between the grommet (10) and the cable (12), said cavity allowing the grommet (10) to move relative to the cable (12).

2. Fastening device according to Claim 1, **characterized in that** the guide part (13) has an angle (20) which corresponds substantially to an opening angle of the installation opening (15).

3. Fastening device according to either of the preceding claims, **characterized in that** the guide part (13) ends in a wedge shape counter to an installation direction (11).

4. Fastening device according to one of the preceding claims, **characterized in that** the grommet (10) has a rotation-inhibiting section (21) at least in the region of the contour (26).

5. Fastening device according to one of the preceding claims, **characterized in that** the rotation-inhibiting section (21) has a design which is not rotationally symmetrical in relation to the cable axis.

6. Fastening device according to Claim 4 or 5, **characterized in that** the grommet (100) has rotation-inhibiting sections (21) at a point at which said grommet interacts with a constricted portion (17) of the holder (18), in particular wherein the rotation-inhibiting sections (21) have at least one side face which runs parallel to the installation direction (11).

7. Fastening device according to one of the preceding claims, **characterized in that** that contour (26) is annular.

8. Fastening device according to one of the preceding claims, **characterized in that** the guide part (13) projects at least partially beyond the contour (26).

9. Fastening device according to one of the preceding claims, **characterized in that** the guide part (13) is connected to the grommet (10) via at least one undercut (28).

10. Fastening device according to one of the preceding claims, **characterized in that** the grommet (10) has a side wall (27) adjoining the contour (26).

11. Fastening device according to one of the preceding claims, **characterized in that** the grommet (10) has a bead (24) adjoining the contour (26).

12. Fastening device according to one of the preceding claims, **characterized in that** the outside diameter of the side wall (27) is somewhat larger than the outside diameter of the bead (24).

13. Fastening device according to one of the preceding claims, **characterized in that** a front bead (30) is provided at one end of the grommet (10).

14. Fastening device according to one of the preceding claims, **characterized in that** the transition between the contour (26) and the bead (24) is made at a certain radius.

15. Fastening device according to one of the preceding claims, **characterized in that** the transition between the side wall (27) and the contour (26) is made via an edge.

## Revendications

1. Dispositif de fixation pour un câble, en particulier pour un câble électrique (12) dans un véhicule automobile, comprenant une douille (10) qui peut être immobilisée dans un support (18), qui entoure le câble (12) au moins partiellement dans la direction axiale et qui, à l'aide d'un contour (26), est fixée de manière amovible dans une ouverture de réception (16) du support (18), dans lequel la douille (10) possède au moins une partie de guidage (13) afin de permettre le montage (10) de la douille (10) dans une position correcte dans l'ouverture de réception (16), et comporte en outre des moyens (14, 22) pour augmenter la flexibilité d'au moins la partie de guidage (13), **caractérisé en ce que** la partie de guidage (13) est équipée d'une partie biseautée présentant un angle (20) configuré pour coopérer avec une ouverture de montage (15) biseautée de manière correspondante du support et **en ce qu'**il est prévu, en tant que moyen destiné à augmenter la flexibilité, au moins un évidement (14) qui est orienté perpendiculairement à une direction de montage (11), et/ou **en ce que** la douille (10) est configurée, en tant que moyen pour augmenter la flexibilité, de manière à ce qu'elle forme une cavité (22) entre la douille (10) et le câble (12), qui permet un mouvement de la douille (10) par rapport au câble (12) .

2. Dispositif de fixation selon la revendication 1, **caractérisé en ce que** la partie de guidage (13) présente un angle (20) qui concorde sensiblement avec un angle d'ouverture de l'ouverture de montage (15).

3. Dispositif de fixation selon l'une quelconque des revendications précédentes, **caractérisé en ce que** la partie de guidage (13) s'effile en biseau en sens opposé à la direction de montage (11).

4. Dispositif de fixation selon l'une quelconque des revendications précédentes, **caractérisé en ce que** la douille (10) comporte au moins une partie (21) inhibant la rotation dans la zone du contour (26).

5. Dispositif de fixation selon l'une quelconque des revendications précédentes, **caractérisé en ce que** la partie inhibant la rotation (21) présente une configuration non symétrique de rotation par rapport à l'axe du câble.

6. Dispositif de fixation selon la revendication 4 ou 5, **caractérisé en ce que** la douille (100) présente, en un point où elle coopère avec une partie rétrécie (17) du support (18), des sections inhibant la rotation (21), en particulier, dans lequel les sections inhibant la rotation (21) comportent au moins une surface latérale s'étendant parallèlement à la direction de montage (11).

7. Dispositif de fixation selon l'une quelconque des revendications précédentes, **caractérisé en ce que** le contour (26) présente une forme annulaire.

8. Dispositif de fixation selon l'une quelconque des revendications précédentes, **caractérisé en ce que** la partie de guidage (13) dépasse au moins partiellement du contour (26).

9. Dispositif de fixation selon l'une quelconque des revendications précédentes, **caractérisé en ce que** la partie de guidage (13) est reliée à la douille (10) par l'intermédiaire d'au moins une contre-dépouille (28).

10. Dispositif de fixation selon l'une quelconque des revendications précédentes, **caractérisé en ce que** la douille (10) présente une paroi latérale (27) adjacente au contour (26).

11. Dispositif de fixation selon l'une quelconque des revendications précédentes, **caractérisé en ce que** la douille (10) présente un bourrelet (24) adjacent au contour (26).

12. Dispositif de fixation selon l'une quelconque des revendications précédentes, **caractérisé en ce que** le diamètre extérieur de la paroi latérale (27) est configuré de manière à être légèrement supérieur au diamètre extérieur du bourrelet (24).

13. Dispositif de fixation selon l'une quelconque des revendications précédentes, **caractérisé en ce qu'**il est prévu un bourrelet avant (30) à une extrémité de la douille (10).

14. Dispositif de fixation selon l'une quelconque des revendications précédentes, **caractérisé en ce que** la transition entre le contour (26) et le bourrelet (24) s'effectue avec un rayon déterminé.

15. Dispositif de fixation selon l'une quelconque des revendications précédentes, **caractérisé en ce que** la transition entre la paroi latérale (27) et le contour (26) s'effectue par l'intermédiaire d'une arête.
